# EUROPEAN PATENT APPLICATION

(11) **EP 4 258 461 A1**
(43) Date of publication of application: **11.10.2023**
(21) Application number: 22899029.7
(22) Date of filing: 23.11.2022
(51) Int. Cl.: H01M 50/591, H01M 50/586, H01M 10/04, H01M 50/105, H01M 50/178

(54) **POUCH-TYPE SECONDARY BATTERY AND MANUFACTURING METHOD THEREFOR**

(30) Priority: 23.11.2021 KR 20210162724; 22.11.2022 KR 20220157528
(71) Applicant: LG Energy Solution, Ltd., Seoul 07335 (KR)
(72) Inventor: KWON, Myung Bin, Daejeon 34122 (KR); KIM, Shin Chul, Daejeon 34122 (KR)
(74) Representative: Plasseraud IP
(86) International application number: PCT/KR2022/018620
(87) International publication number: WO 2023/096347

(57) **Abstract**

Disclosed herein relates to a pouch-type secondary battery having a sealing part in which a two-layer pouch-type battery case is heat-sealed in a state of accommodating an electrode assembly, and it includes a cover member positioned between a thickness side of an electrode assembly and a pouch-type battery case on at least one of four thickness sides constituting a thickness of the electrode assembly.

Accordingly, since the cover member disconnects a separator from an inner coating layer of the pouch, it prevents the separator from being adhered to the inner coating layer when forming the sealing part, and thus preventing damage to the inner coating layer due to the movement of the electrode assembly.

## Description

### [Technical Field]

This application claims the benefit of priority based on Korean Patent Application No. 10-2021-0162724 filed on November 23, 2021, and Korean Patent Application No. 10-2022-0157528 filed on November 22, 2022.

The present invention relates to a pouch-type secondary battery and a manufacturing method thereof.

### [Background Technology of the Invention]

Depending on the shape of the battery case, secondary batteries are classified into a cylindrical battery and a prismatic battery in which an electrode assembly is embedded in a cylindrical or prismatic metal can, and a pouch-type battery in which an electrode assembly is embedded in a pouch-type battery case made of an aluminum laminate sheet.

The electrode assembly built into the battery case is a power generation element capable of charging and discharging, consisting of a positive electrode, a negative electrode, and a separator interposed between the positive electrode and the negative electrode. The electrode assembly can be classified into a jelly-roll type in which a long sheet-shaped positive electrode and negative electrode coated with an active material are wound with a separator interposed therebetween, and a stack type in which multiple positive electrodes and negative electrodes of a predetermined size are sequentially stacked with a separator interposed therebetween.

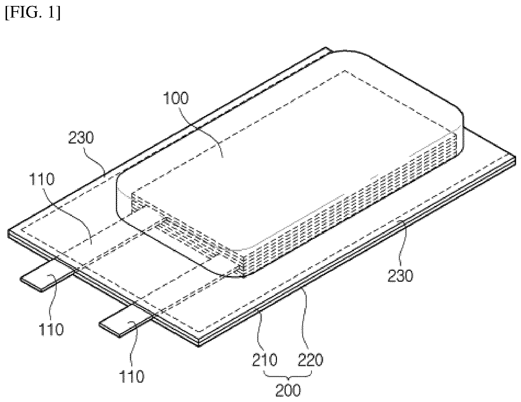

As shown in FIG. 1, in this pouch-type secondary battery, an electrode assembly 100 is accommodated inside a battery case 200, and positive electrode and negative electrode tabs are welded to two electrode leads 110, respectively, so that they are exposed to the outside of the battery case 200.

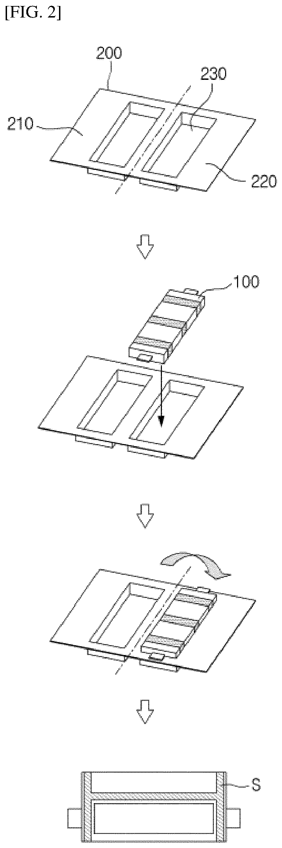

FIG. 2 illustrates a series of processes for manufacturing a pouch-type secondary battery by accommodating and sealing an electrode assembly in a pouch-type battery case. Referring to FIG. 2, the battery case 200 for accommodating the electrode assembly 100, as shown in FIG. 2, may have a structure in which a lower case 220 and an upper case 210 covering the lower case 220 are integrally formed, and it may be a structure in which a contact surface between the lower case 220 and the upper case 210 is bent and folded. In addition, the lower case 220 and the upper case 210 each have a laminated structure composed of an inner coating layer, a metal layer, and an outer coating layer.

Such battery case 200 is provided with an electrode assembly accommodating part 230 having an indented inside to accommodate the electrode assembly 100, and accommodates the electrode assembly in the accommodating part. A pouch-type secondary battery can be manufactured by bending and folding the contact surface (dotted line) between the lower case 220 and the upper case 210, and then forming a sealing part S which is heat-sealed along the outer periphery of the electrode assembly accommodating part using a sealing member (not shown).

The sealing part is formed by pressing a to-be-sealed portion at a high temperature using a sealing member, and during the high temperature/pressurization by the sealing member, the battery case having a laminated structure is heated and the resin of the inner coating later is melted, thereby forming the sealing part as the two-layered battery case is heat-sealed.

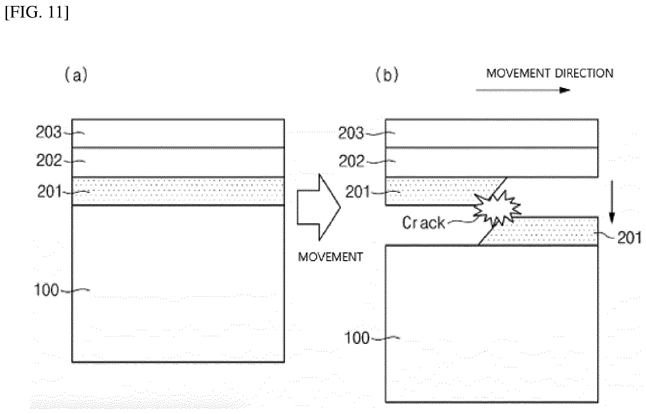

However, when a to-be-sealed portion of the battery case is pressed at a high temperature with the sealing member to form a sealing part, a binder component in a separator protruding from the end of the electrode assembly and the inner coating layer of the battery case are melted together by heat, and the inner coating layer of the battery case may be heat-sealed to the electrode assembly. In this case, when the secondary battery moves for various reasons such as external physical impact, the electrode assembly on the inside moves and flow force is transmitted to the inner coating layer of the battery case attached to the electrode assembly, and as shown in FIG. 11, damage such as cracks may occur on the inner coating layer, which may cause an insulation defect of the battery case.

Therefore, it is necessary to develop a technology capable of preventing such an insulation defect.

### [Description of the Invention]

### [Technical Problem]

The pouch-type secondary battery of the present invention is to solve the above problems in which a separator is heat-sealed with an inner coating layer of a battery case due to the melting of a binder component of the separator when forming a sealing part of a pouch-type battery, therefore it is directed to provide a pouch-type secondary battery capable of preventing damage to the inner coating layer of the battery case when an electrode assembly moves, and a manufacturing method thereof.

### [Technical Solution]

A pouch-type secondary battery according to an embodiment of the present invention is a pouch-type secondary battery having a sealing part in which a two-layer pouch-type battery case is heat-sealed in a state of accommodating an electrode assembly that may include a cover member positioned between a thickness side of the electrode assembly and a pouch-type battery case on at least one of four thickness sides constituting a thickness of the electrode assembly.

In an exemplary embodiment of the present invention, the cover member may be located between the thickness side of the electrode assembly and the pouch-type battery case, along the sealing part.

In an exemplary embodiment of the present invention, the pouch-type battery case may have a form in which a pouch-type battery case having a pair of accommodating parts with an indented inside where the electrode assembly is accommodated is bent along a bending line so that the pair of accommodating parts are in a symmetrical position, and in such case, the sealing part may be formed along the rest of the outer periphery of the accommodating part except for the periphery of the bending line.

In an exemplary embodiment of the present invention, the sealing part may be formed along the outer periphery of an accommodating part where the electrode assembly is accommodated.

In an exemplary embodiment of the present invention, the cover member may be a heat-resistant polymer material having a melting point (Tm) higher than a thermal compression temperature at the time of forming the sealing part.

In an exemplary embodiment of the present invention, the cover member may be in close contact with the thickness side of the electrode assembly.

In an exemplary embodiment of the present invention, the cover member may have a size such that the cover member completely covers the thickness side of the electrode assembly.

In an exemplary embodiment of the present invention, a length of the cover member in a longitudinal direction may correspond to a thickness of the electrode assembly, and the cover member may have an I-shape and may be located between the thickness side and the pouch-type battery case.

In an exemplary embodiment of the present invention, a length of the cover member in a longitudinal direction may be greater than a thickness of the electrode assembly, and the cover member may be bent at both ends of the longitudinal direction to form a U-shape surrounding the thickness side of the electrode assembly, and may be positioned between the thickness side and the pouch-type battery case.

In an exemplary embodiment of the present invention, the electrode assembly may be one selected from: a stack type electrode assembly, a stack-folding type electrode assembly, a lamination-stack type electrode assembly, and a jelly-roll type electrode assembly.

A method for manufacturing a pouch-type secondary battery according to an exemplary embodiment of the present invention includes: preparing an electrode assembly; preparing a cover member by cutting; accommodating the electrode assembly and the cover member inside a pouch-type battery case; and sealing a to-be-sealed portion of the pouch-type battery case, wherein in the accommodating step, the cover member is accommodated so that it is located between a thickness side of the electrode assembly corresponding to the to-be-sealed portion and the pouch-type battery case.

In an exemplary embodiment of the present invention, the preparing an electrode assembly may include: assembling such that a separator is interposed between a positive electrode and a negative electrode; welding the positive tab to the positive lead and the negative tab to the negative lead, respectively; and wrapping the welding part with a protective film.

In an exemplary embodiment of the present invention, preparing a cover member may include a process of cutting the cover member to a size that covers the thickness side constituting a thickness of the electrode assembly in an I-shape.

In an exemplary embodiment of the present invention, preparing a cover member may include a process of cutting the cover member to a size that covers the thickness side constituting a thickness of the electrode assembly in a U-shape.

In an exemplary embodiment of the present invention, the accommodating step may include a process of accommodating the cover member in a state in which the cover member is in close contact with the thickness side constituting a thickness of the electrode assembly corresponding to the to-be-sealed portion.

### [Advantageous Effects]

In the pouch-type secondary battery and method for manufacturing the same according to the present invention, a cover member is inserted into the separation space between the electrode assembly and the pouch-type battery case, and the cover member disconnects the separator and the inner coating layer of the battery case, so even when the binder component of the separator is melted during the formation of a sealing part, adhesion of the separator to the inner coating layer of the battery case may be prevented. Accordingly, when the electrode assembly moves, which is a problem of conventional pouch-type secondary batteries, insulation defect due to damage to the inner coating layer may be prevented.

In addition, since the cover member fills the separation space between the electrode assembly and the pouch, it has an effect of attenuating the impact caused by the movement of the electrode assembly.

### [Brief Description of the Drawings]

FIG. 1 is a perspective view of a pouch-type secondary battery according to an existing technology.
FIG. 2 is a flowchart for explaining a pouch-type secondary battery manufacturing process according to an existing technology.
FIG. 3 is a schematic diagram of a pouch-type secondary battery according to an exemplary embodiment of the present invention.
FIG. 4 is a schematic diagram and a B-B' cross-sectional view of an electrode assembly accommodated inside the pouch-type secondary battery of FIG. 3.
FIG. 5 is a cross-sectional view of A-A in FIG. 3.
FIG. 6 is an exploded view of the pouch type secondary battery of FIG. 3.
FIG. 7 is a top view showing a state in which a cover member is in close contact with an electrode assembly.
FIG. 8 is a cross-sectional view taken along the line C-C' of FIG. 7, showing a cover member according to the first embodiment of the present invention.
FIG. 9 is a cross-sectional view taken along the line C-C' of FIG. 7, showing a cover member according to a second embodiment of the present invention.
FIG. 10 is a flowchart of a method for manufacturing a pouch-type secondary battery according to an exemplary embodiment of the present invention.
FIG. 11 is a conceptual diagram for explaining the problems of the existing technology, (a) shows before the movement of the secondary battery, (b) shows after the movement of the secondary battery.

### [Reference Numerals]

100: ELECTRODE ASSEMBLY
110: ELECTRODE LEAD
200: POUCH-TYPE BATTERY CASE
210: UPPER CASE
220: LOWER CASE
230: ACCOMMODATING PART
S: SEALING PART
T: THICKNESS SIDE
300: COVER MEMBER

### [Best Mode for Carrying Out the invention]

The present invention may have various modifications and various examples, and thus specific examples are illustrated in the drawings and described in detail in the description. However, it should be understood that the present invention is not limited to specific embodiments, and includes all modifications, equivalents or alternatives within the spirit and technical scope of the present invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance. In addition, when a part of a layer, a film, a region or a plate is disposed "on" another part, this includes not only a case in which one part is disposed "directly on" another part, but a case in which a third part is interposed therebetween. In contrast, when a part of a layer, a film, a region or a plate is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

### Pouch-type secondary battery according to the first embodiment

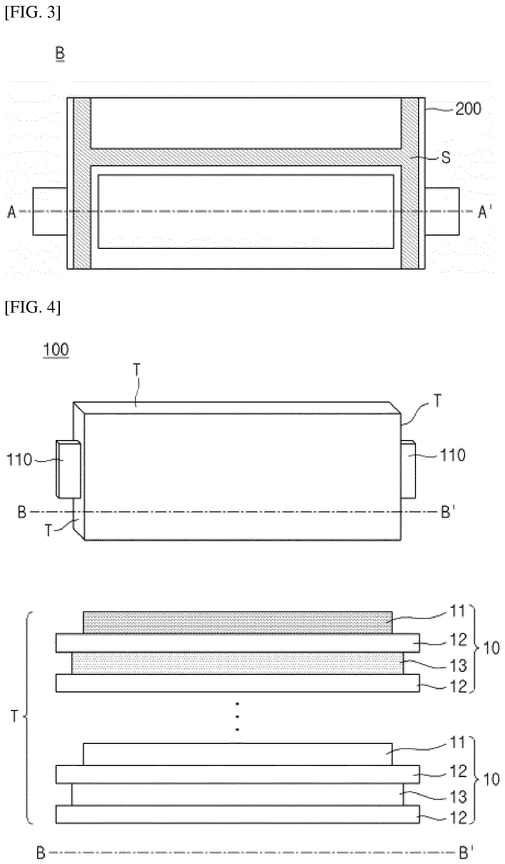

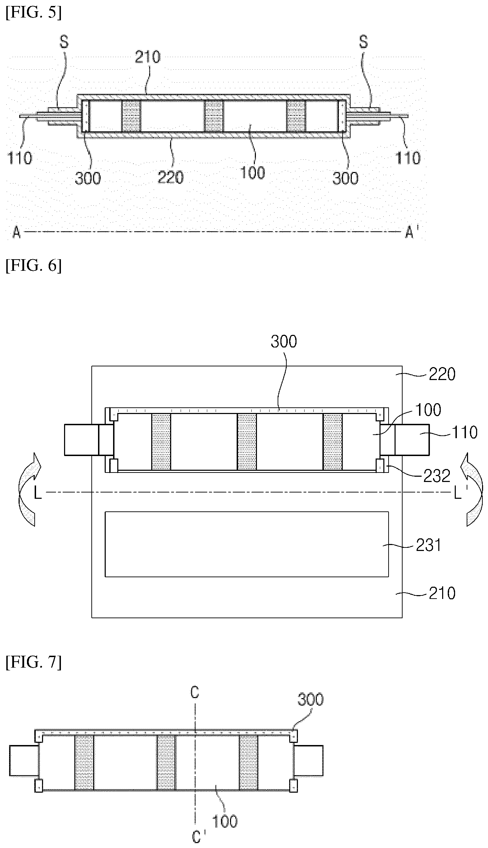

FIG. 3 is a schematic diagram of a pouch-type secondary battery according to an exemplary embodiment of the present invention, FIG. 4 is a schematic diagram and a B-B' cross-sectional view of an electrode assembly accommodated inside the pouch-type secondary battery of FIG. 3, FIG. 5 is a cross-sectional view of A-A in FIG. 3, and FIG. 6 is an exploded view of the pouch type secondary battery of FIG. 3.

Referring to these drawings, a pouch-type secondary battery B according to an exemplary embodiment of the present invention may include a pouch-type battery case 200 and an electrode assembly 100 accommodated inside the pouch-type battery case.

Referring to FIG. 3 and FIG. 6, the pouch-type battery case 200 is for accommodating the electrode assembly 100 in an airtight state, has a pair of accommodating parts 231, 232 with an indented inside in which the electrode assembly 100 is accommodated, and may have a shape bent along a bending line L-L' such that the pair of accommodating parts 231, 232 are in a symmetrical position.

The pouch-type secondary battery B according to an exemplary embodiment of the present invention is provided with a sealing part in which a two-layer pouch-type battery case 200 is heat-sealed in a state of accommodating an electrode assembly 100 in the accommodating part provided in the pouch-type battery case 200, and includes a cover member 300 positioned between the thickness side T of the electrode assembly and the pouch type battery case 200 on at least one of the four thickness sides T constituting the thickness of the electrode assembly 100.

As shown in FIG. 3 and FIG. 6, the pouch-type secondary battery B according to an exemplary embodiment of the present invention may have a sealing part S formed along the rest of the outer periphery of the accommodating parts 231, 232, except for the periphery of the bending line L-L'. Among the outer peripheries of the accommodating parts 231, 232, the surroundings of the bending line L-L' are directly connected to the lower case 220 and the upper case 210 covering the lower case 220, so they do not need to be sealed with the lower case 220 and the upper case 210, thereby, as shown in FIG. 3, the sealing part S may not be formed at the corresponding portion.

However, it is not limited thereto, and a sealing part may be formed along the outer periphery of the accommodating part by preparing two pouch-type battery cases having one accommodating part, where one battery case is the lower case, and the other battery case covers the lower case.

The electrode assembly 100 of the present invention may have a structure in which at least one basic unit 10 of a positive electrode 11/a separator 12/a negative electrode 13/a separator 12 structure is stacked. The side surface of the electrode assembly formed along the stacking direction becomes the thickness side T. Referring to FIG. 4, in the thickness side T, the separator 12 cut relatively longer than the positive electrode 11 and the negative electrode 13 may protrude from the ends of the positive electrode 11 and the negative electrode 13. Therefore, when the sealing part of the battery case 200 is pressed at a high temperature in order to form the sealing part S, as the binder component of the separator 12 and the inner coating layer constituting the battery case 200 are melted together, the separator 12 may be melt-adhered together with the inner coating layer of the sealing part S of the battery case 200 at the thickness side.

Accordingly, in the present invention, when forming the sealing part S, by interposing the cover member 300 between the thickness side T of the electrode assembly 100 and the pouch-type battery case 200, it is possible to prevent the separator 12 from being melted and adhered to the inner coating layer of the battery case 200. Thus, even if the electrode assembly moves, the inner coating layer of the battery case 200 is not damaged, thereby preventing the risk of insulation defect.

The cover member 300 serves to disconnect between the separator 12 and the inner coating layer of the pouch-type battery case 200, and as shown in FIG. 4, the separator 12 is protruded to the outside of the electrode at the thickness side T constituting the thickness of the electrode assembly 100, so the cover member 300 is placed within the separation space between the thickness side T of the electrode assembly 100 and the pouch type battery case 200.

In addition, during the sealing process for forming the sealing part S, the cover member 300 should prevent the binder of the separator 12 from melting and adhering to the inner coating layer around the sealing part, so the cover member 300 is preferably located between the thickness side T of the electrode assembly 100 and the pouch-type battery case 200 along the sealing part S.

Here, the meaning that the cover member 300 is positioned between the thickness side T of the electrode assembly 100 and the pouch-type battery case 200 along the sealing part S will be explained with reference to FIG. 3 and FIG. 6.

Referring to these drawings, the sealing part S may be formed along the rest of the outer periphery of the accommodating part in which the electrode assembly 100 is accommodated, except for the bending line L-L'. Since the cover member 300 is interposed to prevent the binder of the separator and the inner coating layer of the battery case from being heat-sealed together in the sealing process of heat-sealing the two-layer battery case, the cover member is preferably interposed along the entire portion of the sealing part S.

As shown in FIG. 5 and FIG. 6, the cover member 300 is inserted into the separation space between the thickness side T of the electrode assembly 100 and the pouch-type battery case 200, and prevents the direct contact between the separator 12 at the end part of the electrode assembly 100 and the pouch-type battery case 200. Accordingly, when forming the sealing part S, it is possible to suppress the temperature increase of the separator 12 due to the temperature increase of the sealing part S to some extent, and even if the binder component included in the separator 12 is melted, since the cover member 300 disconnects the separator 12 and the inner coating layer of the battery case 200, adhesion of the separator 12 to the inner coating layer of the battery case 200 is prevented.

In addition, since the cover member 300 is inserted into the separation space between the electrode assembly 100 and the pouch-type battery case 200, it fills the separation space and serves to reduce the impact caused by the movement of the electrode assembly.

The cover member is preferably a heat-resistant material that does not melt during the sealing process for forming the sealing part. That is, the cover member is preferably a highly heat-resistant polymeric material with a melting point (Tm) higher than the thermal compression temperature at the time of forming the sealing part. In addition, the cover member is preferably a polymeric material having an insulating property, and may be in the form of a film.

If the cover member is melted during the sealing process like the inner coating layer of the pouch-type battery case, the separator of the electrode assembly-cover member-inner coating layer can be melt-adhered, so that when the electrode assembly moves, the flow impact is transmitted to the inner coating layer, thereby damaging the inner coating layer.

Meanwhile, during the sealing process, since the thermal compression temperature for forming the sealing part is conventionally 100° C to 200°C, the cover member is preferably a polymeric material having a melting point of 180° C to 300° C, but is not limited thereto. Examples of the heat-resistant polymer material having a melting point within the above temperature range include polyimide, polytetrafluoroethylene, polyethylene terephthalate, polycarbonate, polyphenyl sulfide, Teflon, acrylonitrile butadiene styrene, polyacrylate, and the like. The cover member of the present invention may include one or two or more selected from the group consisting of the polymer resins.

In addition, as shown in FIG. 6, the cover member 300 is interposed at a position where it can contact the electrode lead 110, and because an electric current must not be conducted by an electrical connection with the electrode lead 110, it is preferable to be an insulating material. That is, a conductive material such as metal does not melt at a high temperature, preventing heat-sealing of the inner coating layer of the battery case to the electrode assembly, but may cause an internal short circuit when in contact with the electrode lead 110, so it is not suitable as a material for the cover member 300 of the present invention.

Also, as shown in FIG. 7, the cover member 300 may be in close contact with the thickness side T of the electrode assembly 100. That is, the cover member 300 is located close to the thickness side T so that no spare area is formed between the cover member 300 and the electrode assembly 100. When there is a spare area between the cover member and the thickness side, it is not preferable because the separator may protrude through the spare area and invade the space between the cover member and the pouch-type battery case.

It is preferable that the cover member is sized to completely cover the thickness side of the electrode assembly so that it can block the contact of the separator with the inner coating layer of the pouch-type battery case. Accordingly, the length of the cover member in the longitudinal direction may be 100% to 150%, 100% to 130%, or 100% to 120% of the thickness of the electrode assembly. Here, the longitudinal direction of the cover member is the thickness direction of the electrode assembly.

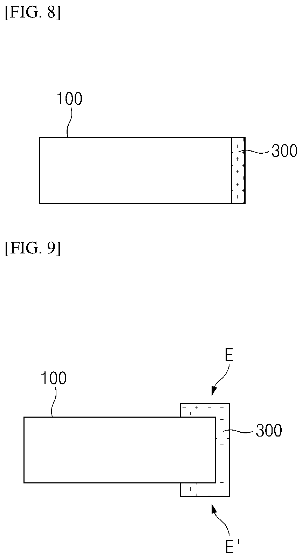

FIG. 8 is a cross-sectional view along the line C-C' of FIG. 7, illustrating a shape of a cover member according to the first embodiment of the present invention. Referring to FIG. 8, the cover member according to the first embodiment of the present invention has a length in the longitudinal direction corresponding to the thickness of the electrode assembly, and may be located between the thickness side and the pouch type battery case, leaving an I-shape in the thickness side of the electrode assembly.

In a specific example of the present invention, the electrode assembly 100 accommodated in the battery case 200 may be one selected from the group consisting of a jelly-roll type electrode assembly having a structure in which a long sheet-shaped positive electrode and negative electrode are wound up with a separator interposed therebetween, a stack-type electrode assembly composed of unit cells having a structure in which rectangular positive electrodes and negative electrodes are stacked with a separator interposed therebetween, a stack-folding type electrode assembly in which the unit cells are wound by a long separator film, a lamination-stacked type electrode assembly in which the unit cells are stacked with a separator interposed therebetween and are attached to each other, etc.

Referring to FIG. 1, such an electrode assembly 100 may include an electrode lead 110 composed of a positive electrode lead and a negative electrode lead. The positive electrode lead is welded to the positive electrode tab and the negative electrode lead is welded to the negative electrode tab, and each of the positive electrode lead and the negative electrode lead may be exposed to the outside of the battery case 200. The extraction directions of the positive electrode lead and the negative electrode lead may be the same or may be opposite to each other.

Since the positive electrode lead and the negative electrode lead are metallic materials, a pair of insulating films (not shown) facing each other are provided in the sealing part where the positive electrode lead and negative electrode lead are located so as to ensure insulation and sealing properties, and each of the positive electrode lead and the negative electrode lead may be disposed to pass between a pair of insulating films (not shown).

The pouch-type battery case 200 may have a laminated structure composed of an inner coating layer, a metal layer, and an outer coating layer. Since the inner coating layer is in direct contact with the electrode assembly, it should have insulation and electrolytic resistance, and must have sealing property to be sealed from the outside, that is, a sealing part where the inner coating layers are thermally bonded to each other should have excellent heat adhesive strength.

Materials for the inner coating layer may be selected from polyolefin resins such as polypropylene, polyethylene, polyethylene acrylic acid, and polybutylene, polyurethane resins, and polyimide resins, which have excellent chemical resistance and good sealing properties, but are not limited thereto. Polypropylene (PP), which is excellent in chemical resistance and mechanical properties such as tensile strength, stiffness, surface hardness, and impact resistance, is most preferred.

The metal layer in contact with the inner coating layer corresponds to a barrier layer that prevents moisture or various gases from penetrating into the battery from the outside, and as a preferable material for such a metal layer, an aluminum film that is lightweight and has excellent moldability can be used.

In addition, an outer coating layer is provided on the other side of the metal layer, and the outer coating layer can use a heat-resistant polymer having excellent tensile strength, moisture permeability, and air permeability to secure heat resistance and chemical resistance while protecting the electrode assembly. For example, nylon or polyethylene terephthalate may be used, but is not limited thereto.

### Pouch-type secondary battery according to the second embodiment

FIG. 9 is a cross-sectional view taken along line C-C' of FIG. 7, showing a shape of a cover member according to the second embodiment of the present invention. Referring to FIG. 9, in the cover member 300 according to the second embodiment of the present invention, the length of the cover member in the longitudinal direction is greater than the thickness of the electrode assembly, and the cover member is bent at both ends E, E' of the longitudinal direction to form a U-shape surrounding the thickness side of the electrode assembly, and may be positioned between the thickness side of the electrode assembly and the pouch-type battery case.

As in the second embodiment, when both ends E, E' of the cover member are bent, compared to the first embodiment, the cover area of the thickness side by the cover member is widened, so it becomes more difficult for the separator of the electrode assembly to contact the inner coating layer of the pouch type battery case. Therefore, when forming the sealing part, the possibility of the separator melt-adhering with the inner coating layer can be further reduced.

Since the second embodiment differs only in the shape of the cover member compared to the first embodiment, further detailed description is omitted.

### Method for manufacturing pouch-type secondary battery

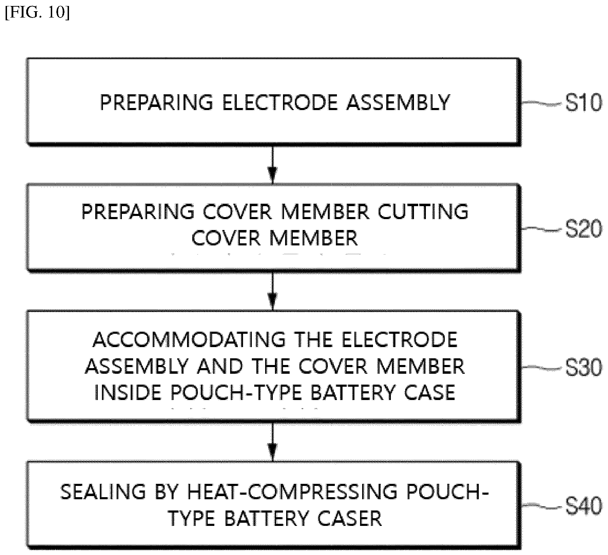

FIG. 10 is a flowchart of a method for manufacturing a pouch-type secondary battery according to an exemplary embodiment of the present invention. Referring to FIG. 10, the method for manufacturing the pouch-type secondary battery according to the present invention includes: preparing an electrode assembly (S10); preparing a cover member by cutting (S20); accommodating the electrode assembly and the cover member inside a pouch-type battery case (S30); and sealing by heat compressing a to-be-sealed portion of a pouch-type battery case (S40).

As shown in FIG. 4, the preparation of the electrode assembly (S10) may be a step of preparing the electrode assembly 100 in which an electrode lead 110 is coupled to an electrode tab (not shown). This electrode assembly has a structure in which multiple electrodes 11, 13 and multiple separators 12 are alternately stacked. Multiple electrodes 11, 13 are each provided with an electrode tab (not shown), and the electrode lead 110 is coupled to the electrode tab (not shown). Here, the multiple electrodes may be a positive electrode and a negative electrode, and the electrode tab may be a positive electrode tab provided in the positive electrode and a negative electrode tab provided in the negative electrode. In addition, the electrode lead 110 may be a positive electrode lead coupled to the positive electrode tab and a negative electrode lead coupled to the negative electrode tab.

The electrode lead is for connecting an external device and the electrode assembly, and in the later accommodating step (S30), the tip of the electrode lead is drawn out of the pouch-type battery case.

In one specific example, the step of preparing the electrode assembly (S10) may include: assembling such that a separator is interposed between a positive electrode and a negative electrode; welding a positive electrode tab to a positive electrode lead and a negative electrode tab to a negative electrode lead, respectively; and wrapping the welding part with a protective film.

The step of preparing the cover member (S20) is a step of preparing the cover member by cutting it to an appropriate size. The cover member is preferably a heat-resistant polymer material having a melting point (Tm) higher than the thermal compression temperature at the time of forming the sealing part and having an insulation performance, and may be in a form of a film.

The length of the cover member in the longitudinal direction may be 100 to 150% of the thickness of the electrode assembly. In one specific example, the preparation of the cover member may be cutting the cover member to a size that covers the thickness side constituting the thickness of the electrode assembly in an I-shape. In another specific example, the preparation of the cover member may be cutting the cover member to a size that covers the thickness side constituting the thickness of the electrode assembly in a U-shape.

The accommodating step (S30) is a step of accommodating the electrode assembly and the cover member inside a pouch-type battery case. Here, as shown in FIG. 7, the cover member and the electrode assembly can be accommodated together inside the pouch-type battery case in a state in which the cover member 300 is in close contact with the thickness side of the electrode assembly 100 so that the cover member 300 is positioned between the thickness side corresponding to the sealing part and the pouch-type battery case.

The sealing step (S40) is a step of forming a sealing part by thermally compressing a to-be-sealed portion in the edge part of the electrode assembly accommodating part. In a state in which the electrode assembly is accommodated in the pouch-type battery case, a to-be-sealed portion of the upper case and a to-be-sealed portion of the lower case are brought into close contact, and using a pair of sealing bars located in the upper part of the to-be-sealed portion of the upper case and the lower part of the to-be-sealed portion of the lower case, heat-pressing is performed with a predetermined force so that the upper case and the lower case can come into close contact. Accordingly, the inner coating layer of the heat-pressed to-be-sealed portion is melted, thereby forming the sealing part.

As above, the present invention has been described with reference to exemplary embodiments, but it should be understood by those skilled in the art or those of ordinary skill in the art that the present invention can be variously modified and changed without departing from the spirit and technical scope of the present invention described in the accompanying claims.

Therefore, the technical scope of the present invention is not limited to the contents described in the detailed description of the specification, but should be defined by the claims.

## Claims

1. A pouch-type secondary battery having a sealing part in which a two-layer pouch-type battery case is heat-sealed in a state of accommodating an electrode assembly, comprising:
a cover member positioned between a thickness side of the electrode assembly and a pouch-type battery case on at least one of four thickness sides constituting a thickness of the electrode assembly.

2. The pouch-type secondary battery of claim 1, wherein
the cover member is located between the thickness side of the electrode assembly and the pouch-type battery case, along the sealing part.

3. The pouch-type secondary battery of claim 1, wherein
the pouch-type battery case has a form in which a pouch-type battery case having a pair of accommodating parts with an indented inside where the electrode assembly is accommodated is bent along a bending line so that the pair of accommodating parts are in a symmetrical position; and
the sealing part is formed along the rest of the outer periphery of the accommodating part except for the periphery of the bending line.

4. The pouch-type secondary battery of claim 1, wherein
The sealing part is formed along the outer periphery of an accommodating part where the electrode assembly is accommodated.

5. The pouch-type secondary battery of claim 1, wherein
the cover member is a heat-resistant polymer material having a melting point (Tm) higher than a thermal compression temperature at the time of forming the sealing part.

6. The pouch-type secondary battery of claim 1, wherein
the cover member is in close contact with the thickness side of the electrode assembly.

7. The pouch-type secondary battery of claim 1, wherein
the cover member has a size such that the cover member completely covers the thickness side of the electrode assembly.

8. The pouch-type secondary battery of claim 7, wherein
a length of the cover member in a longitudinal direction corresponds to a thickness of the electrode assembly, and
the cover member has an I-shape and is located between the thickness side and the pouch-type battery case.

9. The pouch-type secondary battery of claim 7, wherein
a length of the cover member in a longitudinal direction is greater than a thickness of the electrode assembly, and
the cover member is bent at both ends of the longitudinal direction to form a U-shape surrounding the thickness side of the electrode assembly, and is positioned between the thickness side and the pouch-type battery case.

10. The pouch-type secondary battery of claim 1, wherein
the electrode assembly is one selected from: a stack type electrode assembly, a stack-folding type electrode assembly, a lamination-stack type electrode assembly, and a jelly-roll type electrode assembly.

11. A method for manufacturing a pouch-type secondary battery, comprising:
preparing an electrode assembly;
preparing a cover member by cutting;
accommodating the electrode assembly and the cover member inside a pouch-type battery case; and
sealing a to-be-sealed portion of the pouch-type battery case, wherein
in the accommodating step, the cover member is accommodated so that it is located between a thickness side of the electrode assembly corresponding to the to-be-sealed portion and the pouch-type battery case.

12. The method for manufacturing the pouch-type secondary battery of claim 11, wherein
the preparing an electrode assembly comprising:
assembling such that a separator is interposed between a positive electrode and a negative electrode;
welding a positive tab to a positive lead and a negative tab to a negative lead, respectively; and
wrapping the welding part with a protective film.

13. The method for manufacturing the pouch-type secondary battery of claim 11, wherein
the cover member is a heat-resistant polymer material having a melting point (Tm) higher than a thermal compression temperature in the sealing step.

14. The method for manufacturing the pouch-type secondary battery of claim 11, wherein
the preparing a cover member comprises a process of cutting the cover member to a size that covers the thickness side constituting a thickness of the electrode assembly in an I-shape.

15. The method for manufacturing the pouch-type secondary battery of claim 11, wherein
the preparing a cover member comprises a process of cutting the cover member to a size that covers the thickness side constituting a thickness of the electrode assembly in a U-shape.

16. The method for manufacturing the pouch-type secondary battery of claim 11, wherein
in the accommodating step,
the cover member is accommodated in a state in which the cover member is in close contact with the thickness side constituting a thickness of the electrode assembly corresponding to the to-be-sealed portion.
